(19) Europäisches Patentamt
European Patent Office
Office européen des brevets

(11) **EP 2 136 159 A1**

(12) **EUROPEAN PATENT APPLICATION**
published in accordance with Art. 153(4) EPC

(43) Date of publication:
**23.12.2009 Bulletin 2009/52**

(51) Int Cl.:
**F25B 1/00** (2006.01)

(21) Application number: **08855257.5**

(22) Date of filing: **12.11.2008**

(86) International application number:
**PCT/JP2008/003302**

(87) International publication number:
**WO 2009/069258 (04.06.2009 Gazette 2009/23)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.11.2007 JP 2007311341**

(71) Applicant: **Daikin Industries, Ltd.**
**Osaka 530-8323 (JP)**

(72) Inventors:
• **KAWAKATSU, Noriyasu**
**Sakai-shi**
**Osaka 591-8511 (JP)**

• **TAKAOKA, Hisaaki**
**Sakai-shi**
**Osaka 591-8511 (JP)**
• **KURIYAMA, Hideaki**
**Sakai-shi**
**Osaka 591-8511 (JP)**
• **TANAKA, Shigeto**
**Sakai-shi**
**Osaka 591-8511 (JP)**

(74) Representative: **HOFFMANN EITLE**
**Patent- und Rechtsanwälte**
**Arabellastrasse 4**
**81925 München (DE)**

(54) **REFRIGERATION DEVICE**

(57) A refrigeration apparatus (10) includes: a refrigerant circuit (20) provided with a variable-opening expansion valve (13); and a valve control means (33) for controlling the opening of the expansion valve (13) by outputting to the expansion valve (13) an opening command value equal to or larger than a lower limit command value. During operation of a refrigeration cycle and in a lower-limit-controlled state in which the opening command value is equal to the lower limit command value, the valve control means (33) performs a first determination operation of determining whether the refrigerant flow through the expansion valve (13) is in an excessively large amount state or not based on a condition of refrigerant between the expansion valve (13) and the suction side of a compressor (11), and corrects the lower limit command value to a smaller value if the determination result in the first determination operation is that the refrigerant flow through the expansion valve (13) is in an excessively large amount state.

FIG. 1

**Description**

TECHNICAL FIELD

This invention relates to refrigeration apparatuses including a refrigerant circuit provided with an expansion valve variable in opening.

BACKGROUND ART

Refrigeration apparatuses are conventionally known that include a refrigerant circuit provided with an expansion valve variable in opening. Patent Document 1 discloses an air conditioner as a refrigeration apparatus of this kind. The air conditioner includes a superheat controller. During heating operation, a control section of the superheat controller calculates the difference between the temperature at the entrance of an outdoor heat exchanger and the temperature at the exit thereof as a degree of superheat at the exit thereof, and further calculates the difference between the calculated degree of superheat and a desired degree of superheat as a deviation E. A valve control section of the superheat controller controls the opening of the expansion valve to bring the deviation E to zero.

In this kind of refrigeration apparatus, a valve control means for controlling the expansion valve, such as the above valve control section, outputs a pulse signal containing an opening command value to adjust the opening of the variable-opening expansion valve. The opening of the expansion valve is adjusted according to the magnitude of the opening command value. In the valve control means, the lower limit of the opening command value is set. The valve control means outputs an opening command value not smaller than the lower limit.

   Patent Document 1: Published Japanese Patent Application No. H07-225058

DISCLOSURE OF THE INVENTION

PROBLEM TO BE SOLVED BY THE INVENTION

Such variable-opening expansion valves for use in refrigeration apparatuses of this kind have individual differences in opening. Therefore, even if the expansion valves input the same opening command value, their actual openings vary from each other. For this reason, if the opening of an expansion valve of such a conventional refrigeration apparatus is shifted, for example, to a wider position with respect to an input opening command value, the following problem may occur. When the degree of superheat of refrigerant sucked in a compressor decreases, even if the expansion valve is throttled to an extent that the opening command value reaches the lower limit, the actual opening of the expansion valve may not reach the opening expected in control. In this case, the amount of refrigerant flow passing through the expansion valve is larger than an appropriate amount of flow. As a result, it is not possible to eliminate the phenomenon that the refrigerant sucked in the compressor falls into a wet state.

The present invention has been made in view of the foregoing points and, therefore, an object thereof is that the refrigeration apparatus including a refrigerant circuit provided with an expansion valve variable in opening can avoid, regardless of the opening characteristic of the expansion valve, the phenomenon that refrigerant sucked in the compressor falls into a wet state when the opening command value is its lower limit.

MEANS TO SOLVE THE PROBLEM

A first aspect of the invention is directed to a refrigeration apparatus (10) including: a refrigerant circuit (20) provided with a compressor (11) and an expansion valve (13) variable in opening, the refrigerant circuit (20) being operable in a refrigeration cycle; and a valve control means (33) configured to control the opening of the expansion valve (13) by outputting to the expansion valve (13) an opening command value equal to or larger than a predetermined lower limit command value. Furthermore, in the refrigeration apparatus (10), the valve control means (33) is configured to perform, during operation of the refrigeration cycle and in a lower-limit-controlled state in which the opening command value is equal to the lower limit command value, a first determination operation of determining whether the refrigerant flow through the expansion valve (13) is in an excessively large amount state or not based on a condition of low-pressure refrigerant between the expansion valve (13) and the suction side of the compressor (11), and correct the lower limit command value to a smaller value if the determination result in the first determination operation is that the refrigerant flow through the expansion valve (13) is in an excessively large amount state.

A second aspect of the invention is the refrigeration apparatus according to the first aspect of the invention, wherein the valve control means (33) is configured to perform, during operation of the refrigeration cycle and in the lower-limit-controlled state, a second determination operation of determining whether the amount of refrigerant flow through the expansion valve (13) is in an excessively small amount state or not based on a condition of the low-pressure refrigerant, and correct the lower limit command value to a larger value if the determination result in the second determination operation is that the refrigerant flow through the expansion valve (13) is in an excessively small amount state.

A third aspect of the invention is the refrigeration apparatus according to the second aspect of the invention, wherein the valve control means (33) is configured to perform the second determination operation after start of the lower-limit-controlled state and then perform the first determination operation.

A fourth aspect of the invention is the refrigeration apparatus according to the second or third aspect of the invention, wherein the valve control means (33) calculates a corrected lower limit command value by subtracting a predetermined first correction coefficient from the current lower limit command value if the determination result in the first determination operation is that the refrigerant flow through the expansion valve (13) is in an excessively large amount state, and the valve control means (33) calculates a corrected lower limit command value by adding a predetermined second correction coefficient larger than the first correction coefficient to the current lower limit command value if the determination result in the second determination operation is that the refrigerant flow through the expansion valve (13) is in an excessively small amount state.

A fifth aspect of the invention is the refrigeration apparatus according to any one of the second to fourth aspects of the invention, wherein the valve control means (33) performs the first determination operation when the duration of the lower-limit-controlled state reaches a predetermined reference time value.

A sixth aspect of the invention is the refrigeration apparatus according to any one of the second to fifth aspects of the invention, wherein the valve control means (33) performs, during operation of the refrigeration cycle, a superheat control by controlling the opening of the expansion valve (13) to bring the degree of superheat of refrigerant sucked in the compressor (11) to a predetermined desired degree of superheat, but stops the superheat control throughout the second determination operation.

A seventh aspect of the invention is the refrigeration apparatus according to any one of the first to sixth aspects of the invention, wherein if in the first determination operation the degree of superheat of the low-pressure refrigerant is below a predetermined wet-side reference value, the valve control means (33) determines that the refrigerant flow through the expansion valve (13) is in an excessively large amount state.

An eighth aspect of the invention is the refrigeration apparatus according to any one of the second to sixth aspects of the invention, wherein if in the second determination operation at least one of a condition in which the pressure of the low-pressure refrigerant is below a predetermined pressure reference value, and a condition in which the degree of superheat of the low-pressure refrigerant is above a predetermined dry-side reference value is satisfied, the valve control means (33) determines that the refrigerant flow through the expansion valve (13) is in an excessively small amount state.

- OPERATIONS -

In the first aspect of the invention, in a lower-limit-controlled state in which the opening command value is equal to the lower limit command value, the valve control means (33) performs a first determination operation of determining whether the refrigerant flow through the expansion valve (13) is in an excessively large amount state or not based on a condition of low-pressure refrigerant (for example, the pressure or temperature thereof). If the valve control means (33) determines, in the first determination operation, that the refrigerant flow through the expansion valve (13) is in an excessively large amount state, it corrects the lower limit command value to a smaller value. When the lower limit command value is corrected to a smaller value, the opening command value can be changed to a smaller value than the previous lower limit command value. Therefore, if the refrigerant flow through the expansion valve (13) is in an excessively large amount state, the opening of the expansion valve (13) is narrowed. Thus, in the first aspect of the invention, when in the lower-limit-controlled state the refrigerant flow through the expansion valve (13) is determined to be in an excessively large amount state, the lower limit command value is corrected to a smaller value and the expansion valve (13) is thereby narrowed.

In the second aspect of the invention, in the lower-limit-controlled state in which the opening command value is equal to the lower limit command value, the valve control means (33) performs a second determination operation of determining whether the refrigerant flow through the expansion valve (13) is in an excessively small amount state or not based on a condition of the low-pressure refrigerant. If the valve control means (33) determines, in the second determination operation, that the refrigerant flow through the expansion valve (13) is in an excessively small amount state, it corrects the lower limit command value to a larger value. When the lower limit command value is corrected to a larger value, the opening command value can also be accordingly changed to a larger value. Therefore, the opening of the expansion valve (13) is adjusted to be wider. Thus, in the second aspect of the invention, when in the lower-limit-controlled state the refrigerant flow through the expansion valve (13) is determined to be in an excessively small amount state, the lower limit command value is corrected to a larger value and the opening of the expansion valve (23) is thereby adjusted to be wider.

In the third aspect of the invention, the second determination operation is first performed after start of the lower-limit-controlled state, and the first determination operation is then performed. If the refrigerant flow through the expansion valve (13) is in an excessively small amount state, the amount of refrigerant sucked into the compressor (11) decreases, whereby the compressor (11) may idle. On the other hand, if the refrigerant flow through the expansion valve (13) is in an excessively large amount state, the refrigerant sucked into the compressor (11) falls into a wet state, whereby the compressor (11) may cause liquid compression. In comparison of idling of the compressor (11) with liquid compression in the compressor (11), the continuation of the former is more likely to damage the compressor (11). Therefore, in the third aspect of the invention, the determination of whether the refrigerant flow is in an excessively small amount state, in which case more burden is placed on the compressor (11), is made prior to the other determination.

In the fourth aspect of the invention, in comparison of the first correction coefficient for use upon a determination that the refrigerant flow through the expansion valve (13) is in an excessively large amount state with the second correction coefficient for use upon a determination that the refrigerant flow through the expansion valve (13) is in an excessively small amount state, the second correction coefficient has a larger value. As described previously, in comparison with the case where the refrigerant flow through the expansion valve (13) is in an excessively large amount state, more burden is placed on the compressor (11) when the refrigerant flow through the expansion valve (13) is in an excessively small amount state. Therefore, in the fourth aspect of the invention, the second correction coefficient, which is used in an excessively small amount state of refrigerant flow that places more burden on the compressor (11), is set at a larger value than the first correction coefficient used in an excessively large amount state of refrigerant flow.

In the fifth aspect of the invention, the first determination operation is performed when the duration of the lower-limit-controlled state reaches a predetermined reference time value. The first determination operation is not performed as soon as the start of the lower-limit-controlled state. In the fifth aspect of the invention, the first determination operation is performed when the duration of the lower-limit-controlled state reaches an adequate time length.

In the sixth aspect of the invention, the superheat control is stopped throughout the second determination operation. Specifically, throughout the second determination operation, the control over the expansion valve (13) based on a desired degree of superheat is stopped.

In the seventh aspect of the invention, whether the refrigerant flow through the expansion valve (13) is in an excessively large amount state is determined based on the degree of superheat of the low-pressure refrigerant as a condition of the low-pressure refrigerant.

In the eighth aspect of the invention, whether the refrigerant flow through the expansion valve (13) is in an excessively small amount state is determined based on the pressure and the degree of superheat of the low-pressure refrigerant as conditions of the low-pressure refrigerant.

EFFECTS OF THE INVENTION

In the present invention, when in the lower-limit-controlled state the refrigerant flow through the expansion valve (13) is determined to be in an excessively large amount state, the lower limit command value is corrected to a smaller value and the expansion valve (13) is thereby narrowed. Therefore, even if the opening of the expansion valve (13) used in the refrigeration apparatus (10) is shifted to a wider position with respect to an input opening command value, the opening command value can be set at a smaller value than the current lower limit command value. This avoids that the amount of refrigerant flow through the expansion valve (13) exceeds an appropriate amount of flow. Hence, regardless of the opening characteristic of the expansion valve (13), it can be avoided that the refrigerant sucked in the compressor (11) falls into a wet state when the opening command value is its lower limit.

In the second aspect of the invention, when in the lower-limit-controlled state the refrigerant flow through the expansion valve (13) is determined to be in an excessively small amount state, the lower limit command value is corrected to a larger value and the opening of the expansion valve (23) is thereby adjusted to be wider. Here, the fact that in the lower-limit-controlled state the refrigerant flow through the expansion valve (13) is in an excessively small amount state means that the opening of the expansion valve (13) used in the refrigeration apparatus (10) is shifted to a narrower position with respect to an input opening command value. In short, this means that the lower limit command value before the correction is too small for the expansion valve (13). In view of this, in the second aspect of the invention, when in the lower-limit-controlled state the refrigerant flow through the expansion valve (13) is determined to be in an excessively small amount state, the lower limit command value is corrected to a larger value. Thus, the lower limit command value can be approached to an appropriate value.

In the third aspect of the invention, the determination of whether the refrigerant flow is in an excessively small amount state, in which case more burden is placed on the compressor (11), is made prior to the determination of whether the refrigerant flow is in an excessively large amount state. Therefore, as compared with the case where the above determinations are made in inverse order, the duration when the refrigerant flow is in an excessively small amount state, in which case more burden is placed on the compressor (11), is shortened. This reduces the burden on the compressor (11).

In the fourth aspect of the invention, the second correction coefficient, which is used in an excessively small amount state of refrigerant flow that places more burden on the compressor (11), is set at a larger value than the first correction coefficient used in an excessively large amount state of refrigerant flow. Thus, as compared with the case of an excessively large amount state of refrigerant flow, the amount of change in the lower limit command value due to the correction is larger in an excessively small amount state of refrigerant flow that places more burden on the compressor (11). Therefore, the amount of change in the opening command value whose lower limit command value has been corrected is also larger, which changes the opening of the expansion valve (13) to a larger extent. Hence, the compressor (11) can be quickly released from the excessively small amount state of refrigerant flow that places more burden on the compressor (11), which reduces the burden on the compressor (11).

In the fifth aspect of the invention, the first determination operation is performed when the duration of the lower-limit-controlled state reaches an adequate time length. Specifically, when the opening of the expansion valve (13) changes, the condition of the low-pressure refrigerant starts to change. However, it takes time to stabilize the condition of the low-pressure refrigerant after the change of the opening of the expansion valve (13). Therefore, even if the lower-limit-controlled state starts, it takes time to stabilize the condition of the low-pressure refrigerant. For this reason, if the first determination operation is made as soon as the start of the lower-limit-controlled state, whether the refrigerant flow through the expansion valve (13) is in an excessively large amount state may not be able to be accurately determined. To cope with this, in the fifth aspect of the invention, the first determination operation is performed when the duration of the lower-limit-controlled state reaches an adequate time length. Thus, the condition of the low-pressure refrigerant has been stabilized before the first determination operation is performed. Therefore, in the first determination operation, whether the refrigerant flow through the expansion valve (13) is in an excessively large amount state can be accurately determined.

BRIEF DESCRIPTION OF DRAWINGS

[FIG. 1] FIG. 1 is a schematic block diagram of a refrigeration apparatus according to an embodiment.

[FIG. 2] FIG. 2 is a longitudinal cross-sectional view of an expansion valve in the above embodiment.

[FIG. 3] FIG. 3 is a graph showing the flow characteristics of expansion valves for the above embodiment.

[FIG. 4] FIG. 4 is a table showing lower limit command values set in a valve control section in the above embodiment.

[FIG. 5] FIG. 5 is a flow chart showing the flow of a minimum-open valve opening detection operation and a first correction operation in the refrigeration apparatus according to the above embodiment.

[FIG. 6] FIG. 6 is a flow chart showing the flow of a second correction operation in the refrigeration apparatus according to the above embodiment.

LIST OF REFERENCE NUMERALS

10    refrigeration apparatus
11    compressor
12    external heat exchanger
13    expansion valve
14    internal heat exchanger
20    refrigerant circuit
21    external fan
22    internal fan
30    controller
33    valve control section (valve control means)
34    lower limit correction part

BEST MODE FOR CARRYING OUT THE INVENTION

An embodiment of the present invention will be described below in detail with reference to the drawings.

This embodiment is a refrigeration apparatus (10) according to the present invention. The refrigeration apparatus (10) of this embodiment is constituted as a container refrigeration apparatus (10) for cooling the interior of a container. The refrigeration apparatus (10) is configured so that the preset temperature in the interior of the cold storage can be selected within a relatively wide temperature range (for example, from - 30°C to 46°C).

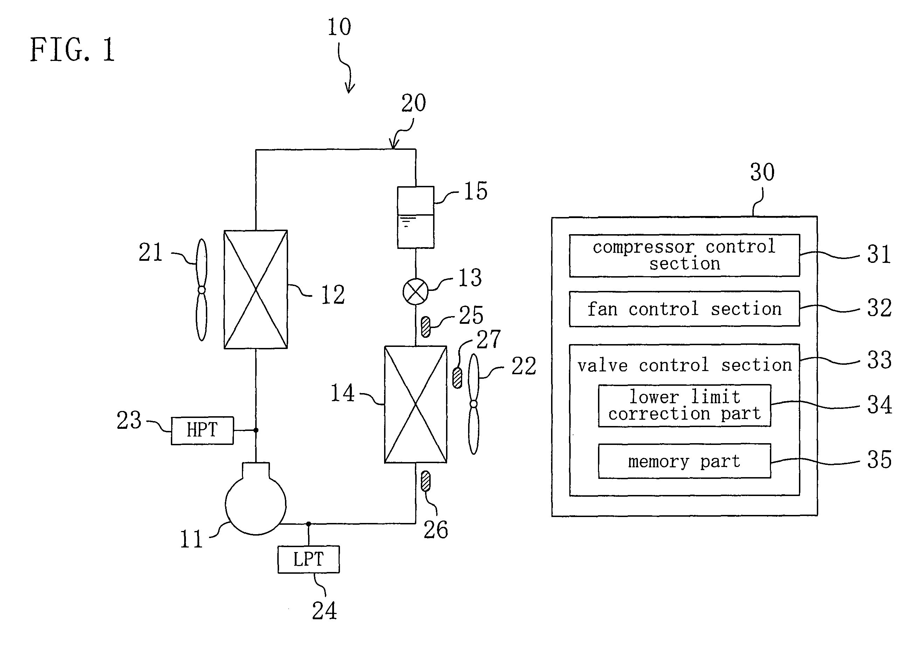

As shown in FIG. 1, the refrigeration apparatus (10) includes a refrigerant circuit (20) charged with refrigerant. The refrigerant circuit (20) includes a compressor (11), an external heat exchanger (12), an expansion valve (13) and an internal heat exchanger (14) all connected therein. The refrigerant circuit (20) operates in a vapor compression refrigeration cycle by circulating the refrigerant therethrough.

The compressor (11) is constituted, for example, as a high-pressure dome compressor. The discharge side of the compressor (11) is connected to the gas side of the external heat exchanger (12). The suction side of the compressor (11) is connected to the gas side of the internal heat exchanger (14).

The external heat exchanger (12) is constituted by a cross-fin-and-tube heat exchanger. Disposed near to the external heat exchanger (12) is an external fan (21) for feeding external air to the external heat exchanger (12). The external heat exchanger (12) provides heat exchange between external air and the refrigerant. The liquid side of the external heat exchanger (12) is connected to the expansion valve (13). Disposed between the external heat exchanger (12) and the expansion valve (13) is a receiver (15) for temporarily accumulating the refrigerant.

The internal heat exchanger (14) is constituted by a cross-fin-and-tube heat exchanger. Disposed near to the internal heat exchanger (14) is an internal fan (22) for feeding internal air to the internal heat exchanger (14). The internal heat exchanger (14) provides heat exchange between internal air and the refrigerant. The liquid side of the internal heat exchanger (14) is connected to the expansion valve (13).

The expansion valve (13) is constituted by an motor-operated expansion valve variable in opening. The opening of the expansion valve (13) is adjusted according to control pulses (an opening command value) of a pulse signal output by the later-described valve control section (33). Details of the expansion valve (13) will be described later.

The refrigeration apparatus (10) includes a controller (30). The controller (30) includes a compressor control section (31), a fan control section (32) and a valve control section (33). Details of the controller (30) will be described later.

The refrigeration apparatus (10) of this embodiment is provided also with a plurality of sensors. Specifically, at the discharge side of the compressor (11) of the refrigerant circuit (20), a high-side pressure sensor (23) is disposed for detecting the pressure of high-pressure refrigerant discharged from the compressor (11). On the other hand, at the suction side of the compressor (11), a low-side pressure sensor (24) is disposed for detecting the pressure of low-pressure refrigerant being sucked into the compressor (11). The measured values of the high-side pressure sensor (23) and the low-side pressure sensor (24) are detected in gage pressure.

At the entrance side of the internal heat exchanger (14) serving as an evaporator, an entrance temperature sensor (25) is disposed for detecting the temperature of refrigerant flowing into the internal heat exchanger (14). On the other hand, at the exit side of the internal heat exchanger (14), an exit temperature sensor (26) is disposed for detecting the temperature of refrigerant flowing out of the internal heat exchanger (14). Furthermore, in the vicinity of the internal heat exchanger (14), a suction temperature sensor (27) is disposed for measuring the temperature of air flowing towards the internal heat exchanger (14). The measured values of these sensors (23-27) are input to the controller (30).

- STRUCTURE OF EXPANSION VALVE -

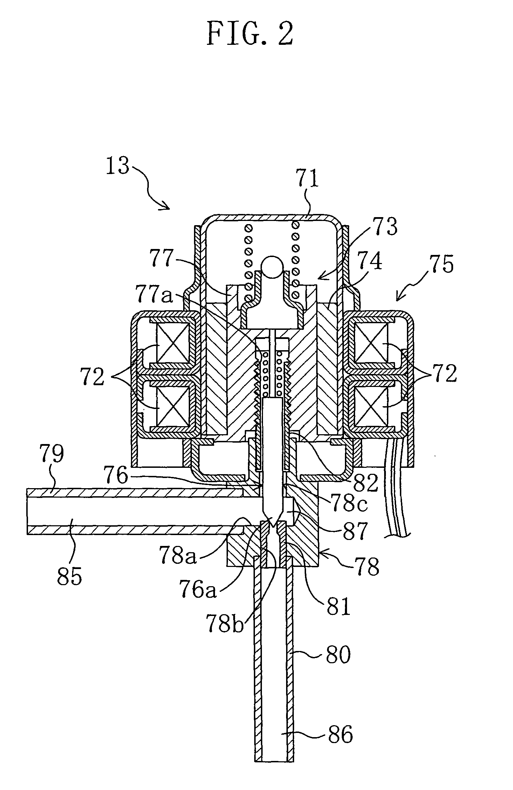

The expansion valve (13) of the refrigerant circuit (20) is a direct-acting motor-operated expansion valve. Here, the expansion valve (13) will be described with reference to FIG. 2.

In the expansion valve (13), a pulse motor (75) is constituted by: a solenoid (72) as a stator placed on the outer periphery of a cylindrical motor casing (71); and a rotor (73) placed in the motor casing (71) and having a magnet (74) mounted thereon. The expansion valve (13) is configured to move up and down a needle (76), at the distal end of which a valve element (76a) is formed, according to the rotation of the rotor (73).

The rotor (73) includes a cylindrical bush (77) and the magnet (74) mounted on the outer periphery of the bush (77). The bush (77) has a hole (77a) formed along its rotation axis to open downward. The hole (77a) is internally screw-threaded to form an internal screw. In the hole (77a), the needle (76) is fixed at the top end to the rotor (73) and disposed to extend downward.

The motor casing (71) is mounted at the bottom integrally to a columnar valve body (78). In the valve body (78), two holes (78a, 78b) are formed orthogonally across each other as flow channels that open laterally and downward. The valve body (78) is joined to first and second joints (79, 80) communicated with the holes (78a, 78b) to form first and second pipe lines (85, 86), respectively. The hole (78b) connected to the second joint (80) is internally provided with a valve seat (81) for seating the valve element (76a).

In the valve body (78), a hole (78c) is also formed to extend upward from the hole (78b) provided with the valve seat (81). Disposed at the top of the valve body (78) is a cylindrical member (82) communicated with the internal space of the hole (78c) and extending upward. The outer periphery of the cylindrical member (82) is formed into a screw and screw-engaged with the hole (77a) in the rotor (73). Thus, upon rotation of the rotor (73), the rotor (73) moves up and down relative to the valve body (78) fixed to the motor casing (71).

In the interior of the cylindrical member (82), the needle (76) is disposed to extend downward in the hole (77a) with its top end fixed to the rotor (73). The needle (76) is inserted also in the hole (78c) of the valve body (78) communicated with the internal space of the cylindrical member (82). The valve element (76a) at the lower end of the needle (76) is opposed, at a location where the holes (78a, 78b) in the valve body (78) cross each other (i.e., a connecting part (87)), to the valve seat (81) provided in the valve body (78). Thus, upon upward and downward movement of the rotor (73) as described above, the needle (76) accordingly moves up and down in the cylindrical member (82) and in the hole (78c) of the valve body (78). With this movement, the valve element (76a) at the lower end of the needle (76) moves up and down relative to the valve seat (81) (i.e., moves in the longitudinal direction of the second pipe line), thereby opening and closing the expansion valve (13).

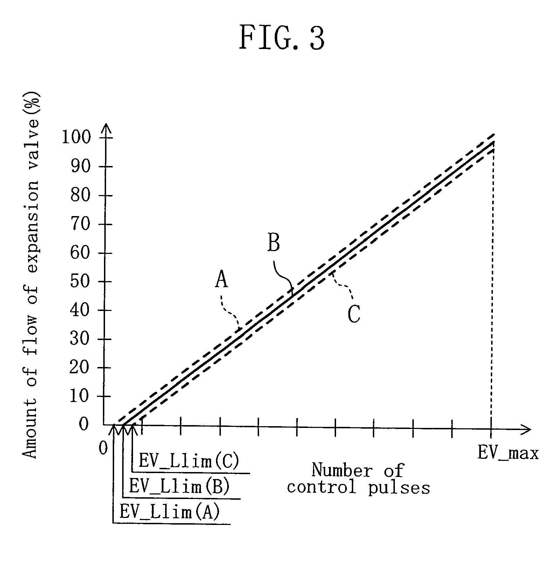

Expansion valves (13) for use in the refrigeration apparatus (10) are products having a maximum number of control pulses (EV) of EV_max (for example, EV_max = 2000). As shown in FIG. 3, these products have different flow characteristics, which show the relationship between the number of control pulses (EV) and the amount of flow through the expansion valve (13), varying from each other within the range from Characteristic Line A to Characteristic Line C. Characteristic Line A indicates the flow characteristic of an expansion valve (13) whose flow rate is the maximum among these products. Characteristic Line B indicates the flow characteristic of an expansion valve (13) whose flow rate is average among these products. Characteristic Line C indicates the flow characteristic of an expansion valve (13) whose flow rate is the minimum among these products. For these products, the assumed range of individual variations in minimum-open valve opening (EV_Llim), which is the number of control pulses (EV) for changing the expansion valve (13) from minimum-open position to closed position, is from EV_Llim(A) pulses (for example, EV_Llim(A) = 50) to EV_Llim(C) pulses (for example, EV_Llim(C) = 150). The standard of the flow rate of each expansion valve (13) is determined as the amount of flow thereof in fully-open position under a condition in which the preset temperature in the interior of the cold storage is relatively high (for example, 30°C).

- OPERATION -

A cooling operation for cooling the interior of the cold storage in the container is described as an operation of the refrigeration apparatus (10) of this embodiment. The cooling operation is a normal operation for adjusting the temperature of the interior of the cold storage that is a space to be controlled. The cooling operation is started when the compressor (11) is activated. In this case, the refrigerant circuit (20) operates in a refrigeration cycle in which the external heat exchanger (12) acts as a condenser and the internal heat exchanger (14) acts as an evaporator.

Specifically, the refrigerant discharged from the compressor (11) releases, in the external heat exchanger (12), heat to external air to condense. The refrigerant having condensed in the external heat exchanger (12) is reduced in pressure by the expansion valve (13) and then flows into the internal heat exchanger (14). In the internal heat exchanger (14), the refrigerant takes heat from internal air to evaporate. On the other hand, the internal air cooled by the internal heat exchanger (14) is fed into the cold storage. The refrigerant having evaporated in the internal heat exchanger (14) is sucked into the compressor (11) and compressed therein.

- CONFIGURATION OF CONTROLLER -

As described previously, the controller (30) includes a compressor control section (31), a fan control section (32) and a valve control section (33). The valve control section (33) constitutes a valve control means (33).

Specifically, the compressor control section (31) is configured to control the operating condition of the compressor (11). For example, the compressor control section (31) controls the operating capacity of the compressor (11) to bring the measured value (LPT) of the low-side pressure sensor (24) to a predetermined desired value.

The fan control section (32) is configured to control the operating conditions of the external fan (21) and the internal fan (22). The fan control section (32) controls the high-side refrigerant pressure in the refrigeration cycle by controlling the operating condition of the external fan (21). Specifically, when the measured value (HPT) of the high-side pressure sensor (23) exceeds a first high-side pressure reference value during operation of the compressor (11), the fan control section (32) activates the external fan (21). On the other hand, when the measured value (HPT) of the high-side pressure sensor (23) falls below a second high-side pressure reference value, the fan control section (32) deactivates the external fan (21). The fan control section (32) deactivates the external fan (21) also when the compressor (11) is deactivated. These high-side pressure reference values are set at higher values in the later-described warming-up and pump-down operations than in the normal operation.

The valve control section (33) is configured to control the opening of the expansion valve (13) during the cooling operation. The valve control section (33) performs a superheat control by controlling the opening of the expansion valve (13) to bring the degree of superheat (SH) of refrigerant at the exit of the internal heat exchanger (14), i.e., the degree of superheat (SH) of low-pressure refrigerant being sucked into the compressor (11), to a predetermined desired degree of superheat (for example, 3°C). However, when the detected value (HPT) of the high-side pressure sensor (23) reaches or exceeds a predetermined third high-side pressure reference value (for example, 2100 kPa), the valve control section (33) narrows the opening of the expansion valve (13) by a predetermined degree, in preference to the superheat control, to reduce the high-side refrigerant pressure of the refrigeration cycle.

More specifically, in the superheat control, the valve control section (33) determines the number of control pulses (EV) to approach the degree of superheat (SH) of refrigerant at the exit of the internal heat exchanger (14) to the desired degree of superheat, and outputs a pulse signal composed of the determined number of control pulses (EV) to the pulse motor (75) of the expansion valve (13). When the degree of superheat (SH) of refrigerant at the exit of the internal heat exchanger (14) is above the desired degree of superheat, the valve control section (33) increases the number of control pulses (EV). On the other hand, when the degree of superheat (SH) of refrigerant at the exit of the internal heat exchanger (14) is below the desired degree of superheat, the valve control section (33) decreases the number of control pulses (EV).

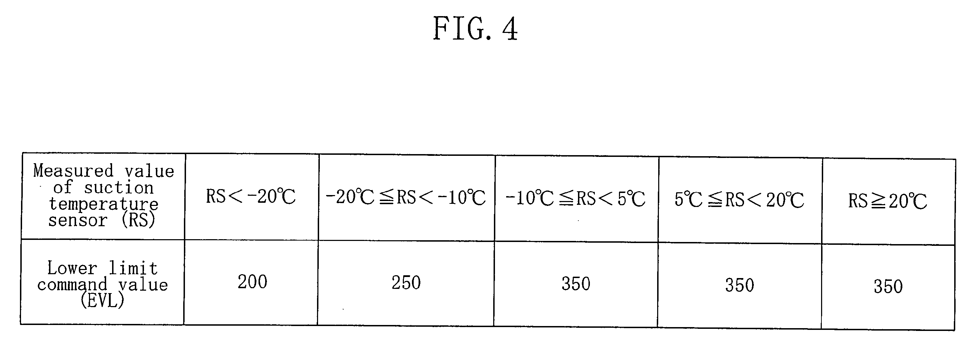

In the valve control section (33), as shown in FIG. 4, lower limit command values (EVL), which are lower limits of the number of control pulses, are set in advance according to measured values (RS) of the suction temperature sensor (27) that are operating conditions. The lower limit command values (EVL) are set, one within each temperature range of measured values (RS) of the suction temperature sensor (27). Furthermore, the lower limit command values (EVL) are set to be greater as the measured value (RS) of the suction temperature sensor (27) increases. The valve control section (33) determines the number of control pulses (EV) within the range from the lower limit command value (EVL) to the above-mentioned maximum value (EV_max).

In this embodiment, the valve control section (33) includes a lower limit correction part (34). The lower limit correction part (34) is configured to sequentially perform, at startup of the refrigeration apparatus (10), a minimum-open valve opening detection operation of detecting the above-mentioned minimum-open valve opening (EV_Llim) and a first correction operation of correcting the lower limit command value (EVL) using the detected minimum-open valve opening (EV_Llim). In the first correction operation, a correction value (EV_adj) for use in correcting the lower limit command value (EVL) is calculated.

Furthermore, the lower limit correction part (34) is configured to perform, during the cooling operation in a refrigeration cycle, a second correction operation of correcting again the lower limit command value (EVL) corrected in the first correction operation. In the second correction operation, not only the lower limit command value (EVL) but also the correction value (EV_adj) are corrected. The second correction operation includes: a first determination operation of determining, based on a condition of low-pressure refrigerant between the expansion valve (13) and the suction side of the compressor (11), whether the refrigerant flow through the expansion valve (13) is in an excessively large amount state; and a second determination operation of determining, based on a condition of the low-pressure refrigerant, whether the refrigerant flow through the expansion valve (13) is in an excessively small amount state. In the second correction operation, the second determination operation is performed prior to the first determination operation. The second determination operation is performed in a lower-limit-controlled state where the opening command value is equal to the lower limit command value. The first determination operation is performed when the duration of the lower-limit-controlled state reaches a predetermined reference time value (for example, 120 seconds).

The lower limit correction part (34) further includes a memory part (35) for storing the correction value (EV_adj). The memory part (35) is constituted as a memory capable of storing the correction value (EV_adj). The memory part (35) is constituted by a static random access memory (SRAM) that can hold stored data even after the refrigeration apparatus (10) is powered off.

OPERATIONS OF CONTROLLER -

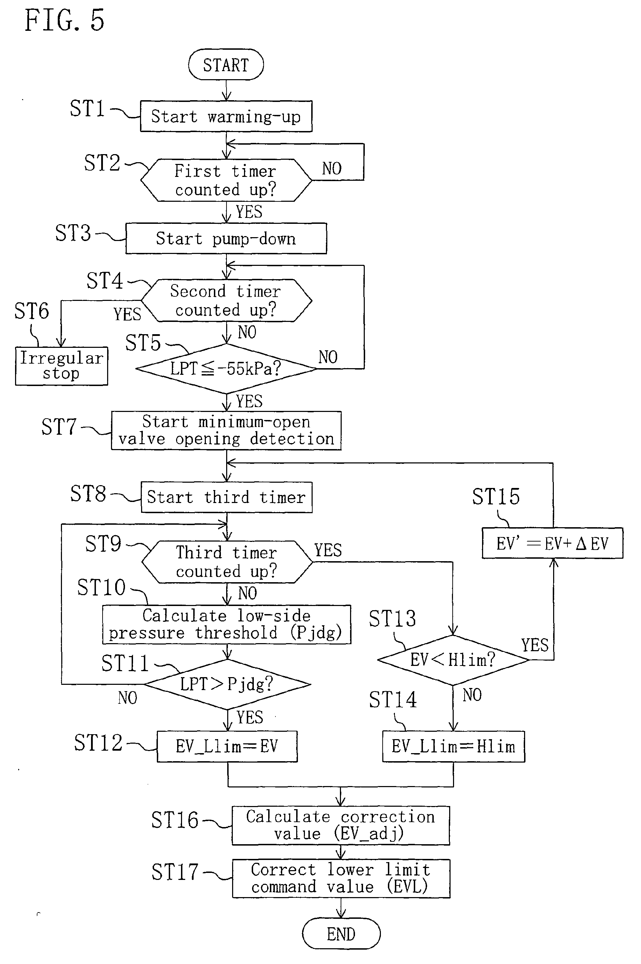

Out of the operations of the controller (30), the minimum-open valve opening detection operation and the first and second correction operations will be described below. The minimum-open valve opening detection operation and the first correction operation are performed in series and, therefore, will be described together with reference to FIG. 5. Furthermore, in the refrigeration apparatus (10), a warming-up operation and a pump-down operation are performed, prior to the minimum-open valve opening detection operation, at startup of the refrigeration apparatus (10). Therefore, the warming-up and pump-down operations are described prior to the description of the minimum-open valve opening detection operation.

First, when the refrigeration apparatus (10) is started up, in Step 1 (ST1), the controller (30) causes the refrigeration apparatus (10) to perform a warming-up operation. In Step 1 (ST1), the compressor control section (31) activates the compressor (11) and the fan control section (32) activates the internal fan (22). Furthermore, the valve control section (33) outputs a pulse signal whose number of control pulses (EV) is a preset value (for example, 800 pulses) to the expansion valve (13) to adjust the opening of the expansion valve (13). Moreover, in the controller (30), a first timer, for example, 90-second timer, is started simultaneously with the activation of the compressor (11).

In addition, the fan control section (32) in the warming-up operation controls the activation and deactivation of the external fan (21) based on the detected value (HPT) of the high-side pressure sensor (23). Specifically, when the detected value (HPT) of the high-side pressure sensor (23) exceeds a predetermined first high-side pressure reference value (for example, 1800 kPa), the fan control section (32) activates the external fan (21). On the other hand, when the detected value (HPT) of the high-side pressure sensor (23) falls below a predetermined second high-side pressure reference value (for example, 1600 kPa), the fan control section (32) deactivates the external fan (21). In the warming-up operation, the high-side refrigerant pressure of the refrigeration cycle is adjusted within a fixed range from the first high-side pressure reference value to the second high-side pressure reference value.

In Step 2 (ST2), the controller (30) makes a first timer determination of determining whether the first timer still counts. If the first timer has already counted up, the controller (30) determines that the warming-up operation has terminated, resets the first timer and then carries out Step 3 (ST3). On the other hand, if the first timer still counts, the controller (30) repeats Step 2 (ST2) until the first timer counts up.

In Step 3 (ST3), the controller (30) causes the refrigeration apparatus (10) to perform a pump-down operation. In Step 3 (ST3), the valve control section (33) sets the expansion valve (13) to a fully-closed position and a second timer, for example a 120-second timer, is started. The pump-down operation is started from the point of time when the expansion valve (13) is closed. The operation of the compressor (11) is continued from the warming-up operation. In the pump-down operation, the compressor (11) is driven with the expansion valve (13) closed, whereby no refrigerant flows into the internal heat exchanger (14) and the refrigerant in the internal heat exchanger (14) is sucked into the compressor (11). Furthermore, in the pump-down operation, like the warming-up operation, the fan control section (32) adjusts the high-side refrigerant pressure of the refrigeration cycle within the fixed range from the first high-side pressure reference value to the second high-side pressure reference value. Upon end of Step 3 (ST3), Step 4 (ST4) is carried out.

In Step 4 (ST4), the controller (30) makes a second timer determination of determining whether the second timer still counts. If the second timer has already counted up, the controller (30) determines that the refrigeration apparatus (10) must be irregularly stopped, proceeds to Step 6 (ST6) and irregularly stops the refrigeration apparatus (10). On the other hand, if the second timer still counts, the controller (30) carries out Step 5 (ST5).

In Step 5 (ST5), determination is made of whether the pump-down operation should be terminated. If the measured value (LPT) of the low-side pressure sensor (24) is equal to or lower than a predetermined first low-side pressure reference value (for example, -55 kPa), the controller (30) determines that the pump-down operation should be terminated, resets the second timer and then carries out Step 7 (ST7). On the other hand, if the measured value (LPT) of the low-side pressure sensor (24) is neither equal to nor lower than the predetermined first low-side pressure reference value, the controller (30) returns to Step 4 (ST4) and makes the second timer determination. To sum up, the refrigeration apparatus (10) of this embodiment is irregularly stopped when the measured value (LPT) of the low-side pressure sensor (24) neither reaches nor falls below the first low-side pressure reference value before the second timer counts up.

With Step 7(ST7), the minimum-open valve opening detection operation of the lower limit correction part (34) of the controller (30) starts. In Step 7 (ST7), the lower limit correction part (34) deactivates the compressor (11) and also deactivates the external fan (21) if it is in operation. The operation of the internal fan (22) is continued. Furthermore, in Step 7 (ST7), the lower limit correction part (34) outputs a pulse signal whose number of control pulses (EV) is a predetermined initial value (for example, 50 pulses) to the expansion valve (13) to adjust the opening of the expansion valve (13). Thus, the needle (76) of the expansion valve (13) slightly moves up. The initial value is set at the lower limit (EV_Llim(A)) of the assumed range of individual variations in the minimum-open valve opening (EV_Llim) of the expansion valve (13). Upon end of Step 7 (ST7), the control proceeds to Step 8 (ST8), in which a third timer, for example, a 20-second timer, is started.

In Step 9 (ST9), the lower limit correction part (34) makes a third timer determination of determining whether the third timer still counts. If the third timer still counts, the lower limit correction part (34) sequentially carries out Step 10 (ST10) and Step 11 (ST11). On the other hand, if the third timer has already counted up, the lower limit correction part (34) carries out Step 13 (ST13).

In Step 10 (ST10), the lower limit correction part (34) calculates a low-side pressure threshold value (Pjdg) for use in determining whether the expansion valve (13) is open. The low-side pressure threshold value (Pjdg) is calculated using the following Equation 1. Upon end of Step 10 (ST10), Step 11 (ST11) is carried out.

$$\text{Equation 1: } Pjdg = Ref(RS) \times F$$

In Equation 1, Pjdg denotes a low-side pressure threshold value, RS denotes a measured value of the suction temperature sensor (27) and F denotes a safety factor (for example, F = 0.5). Ref denotes the function for obtaining the saturated pressure of refrigerant in use from the temperature in gage pressure. Using the above Equation 1, the pressure in which the safety factor is taken into the saturated pressure at the measured value (RS) of the suction temperature sensor (27) is obtained as the low-side pressure threshold value.

In Step 11 (ST11), determination is made of whether the expansion valve (13) is open, that is, whether refrigerant is passing through the expansion valve (13). If the measured value (LPT) of the low-side pressure sensor (24) is above the low-side pressure threshold value (Pjdg), the lower limit correction part (34) determines that the expansion valve (13) is open, and carries out Step 12 (ST12). On the other hand, if the measured value (LPT) of the low-side pressure sensor (24) is equal to or below the low-side pressure threshold value (Pjdg), the lower limit correction part (34) determines that the expansion valve (13) is not open, and returns to Step 9 (ST9).

In Step 12 (ST12), the lower limit correction part (34) detects the current number of control pulses (EV) for the expansion valve (13) as the minimum-open valve opening (EV_Llim). The detected minimum-open valve opening (EV_Llim) is temporarily stored in the memory part (35). Upon end of Step 12 (ST12), Step 16 (ST16) is carried out. The minimum-open valve opening detection operation terminates with Step 12 (ST12), and the first correction operation then starts with Step 16 (ST16).

In Step 13 (ST13), determination is made of whether the current number of control pulses (EV) for the expansion valve (13) is below a predetermined assumed upper limit (Hlim) (for example, Hlim = 150 pulses). The assumed upper limit (Hlim) is the upper limit of the assumed range of individual variations in minimum-open valve opening (EV_Llim).

If in Step 13 (ST13) the current number of control pulses (EV) is equal to or above the assumed upper limit (Hlim), the lower limit correction part (34) carries out Step 14 (ST14) and terminates the minimum-open valve opening detection operation. In Step 14 (ST14), the lower limit correction part (34) detects the value of the assumed upper limit (Hlim) as the minimum-open valve opening (EV_Llim). The detected minimum-open valve opening (EV_Llim) is temporarily stored in the memory part (35). In the minimum-open valve opening detection operation, when the current number of control pulses (EV) reaches the predetermined assumed upper limit (Hlim), the expansion valve (13) is determined to be open even if the measured value (LPT) of the low-side pressure sensor (24) is equal to or below the low-side pressure threshold value (Pjdg).

On the other hand, if in Step 13 (ST13) the current number of control pulses (EV) is below the predetermined assumed upper limit, the lower limit correction part (34) determines that the expansion valve (13) is not yet open, proceeds to Step 15 (ST15) and then returns to Step 8 (ST8). In Step 15 (ST15), the lower limit correction part (34) outputs to the expansion valve (13) a pulse signal composed of a number of control pulses (EV') obtained by adding a preset value (ΔEV) (for example, ΔEV = 20 pulses) to the current number of control pulses (EV) for the expansion valve (13) to adjust the opening of the expansion valve (13). After the output of this pulse signal, the number of control pulses (EV') obtained by adding the preset value (ΔEV) to the previous EV is the current number of control pulses (EV). As described previously, the first correction operation starts with Step 16 (ST16). In Step 16 (ST16), the lower limit correction part (34) calculates a correction value (EV_adj) for use in correcting the lower limit command value (EVL). The correction value (EV_adj) is calculated using the following Equation 2.

$$\text{Equation 2: } EV\_adj = EV\_Llim - EV\_ave$$

In Equation 2, EV_adj denotes a correction value and EV_ave denotes an assumed value of the minimum-open valve opening (EV_Llim) of the expansion valve (13) used in the refrigeration apparatus (10) (for example, EV_ave = 100). The assumed value used in this embodiment is the average between the upper and lower limits of the assumed range of individual variations in minimum-open valve opening (EV_Llim). If the average (EV_ave) is larger than the minimum-open valve opening (EV_Llim), the correction value (EV_adj) is a negative value. The correction value (EV_adj) calculated from Equation 2 is stored in the memory part (35). If there is a correction value (EV_adj) saved previously in the memory part (35), a new correction value (EV_adj) is written over the existing value and saved in the memory part (35). Upon end of Step 16 (ST16), Step 17 (ST17) is carried out.

In Step 17 (ST17), the lower limit correction part (34) corrects the lower limit command value (EVL) using the correction value (EV_adj). The corrected lower limit (EVL') of the number of control pulses is a value obtained by adding the correction value (EV_adj) to the lower limit (EVL) set in the valve control section (33). In Step 17 (ST17), the lower limit (EVL) is corrected for each operating condition. Upon end of Step 17 (ST17), the first correction operation ends. When the first correction operation ends, the compressor (11) is activated and the external fan (21) is also activated, whereby a cooling operation, which is a normal operation, is started.

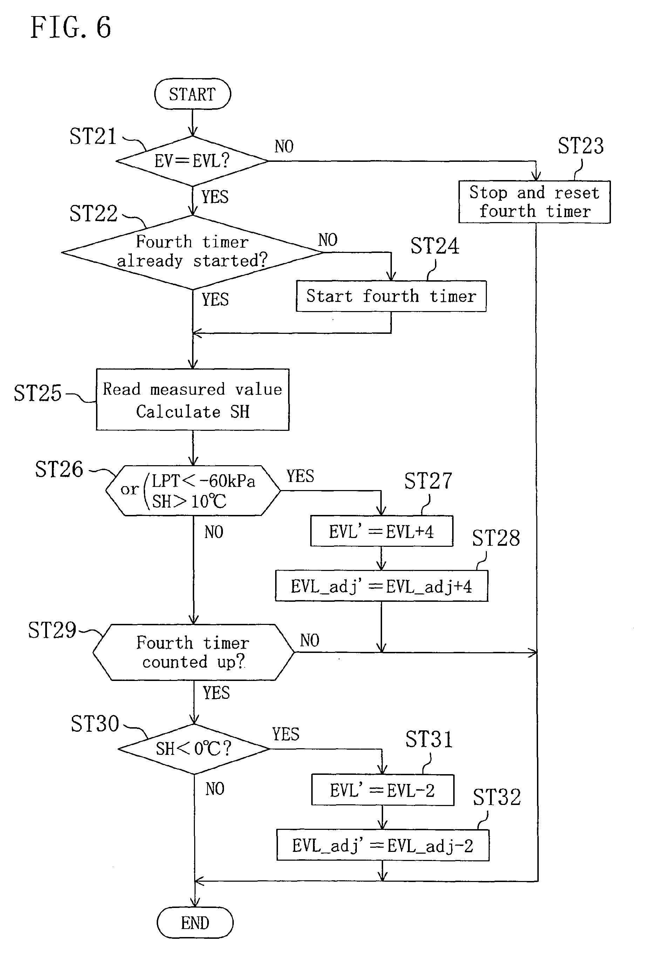

Next, the second correction operation will be described with reference to FIG. 6. Throughout the second correction operation, the superheat control of the valve control section (33) is stopped.

In this refrigeration apparatus (10), in adjusting the degree of superheat (SH) of refrigerant at the exit of the internal heat exchanger (14), the valve control section (33) sometimes outputs a pulse signal whose number of control pulses (EV) is the lower limit command value (EVL) to forcedly throttle the opening of the expansion valve (13). The second correction operation is performed, for example, just after the valve control section (33) outputs a pulse signal whose number of control pulses (EV) is the lower limit command value (EVL).

In the second correction operation, first in Step 21 (ST21), the lower limit correction part (34) determines whether the current number of control pulses (EV) for the expansion valve (13) is equal to the lower limit command value (EVL). If the expansion valve (13) is in a lower-limit-controlled state in which the current number of control pulses (EV) for the expansion valve (13) is equal to the lower limit command value (EVL), the lower limit correction part (34) carries out Step 22 (ST22). On the other hand, if the current number of control pulses (EV) for the expansion valve (13) is not equal to the lower limit command value (EVL), the lower limit correction part (34) terminates the second correction operation, after in Step 23 (ST23) stopping and resetting a fourth timer, for example, a 120-second timer, if it is in operation. When the second correction operation terminates, the superheat control of the valve control section (33) is restarted.

In Step 22 (ST22), the lower limit correction part (34) determines whether the fourth timer has been already started, i.e., whether the fourth timer is in operation. If the fourth timer is not yet started, the lower limit correction part (34) starts the fourth timer in Step 24 (ST24) and then carries out Step 25 (ST25). On the other hand, if the fourth timer has been already started, the lower limit correction part (34) bypasses Step 24 (ST24) and carries out Step 25 (ST25).

In Step 25 (ST25), the lower limit correction part (34) reads a measured value (LPT) of the low-side pressure sensor (24), a measured value of the entrance temperature sensor (25) and a measured value of the exit temperature sensor (26) and calculates the degree of superheat (SH) of refrigerant at the exit of the internal heat exchanger (14). The lower limit correction part (34) calculates as the degree of superheat (SH) the difference between the measured values of the entrance temperature sensor (25) and the exit temperature sensor (26). Upon end of Step 25 (ST25), Step 26 (ST26) is carried out.

In Step 26 (ST26), the lower limit correction part (34) performs a second determination operation of determining whether the refrigerant flow through the expansion valve (13) is in an excessively small amount state. The lower limit correction part (34) determines that the refrigerant flow through the expansion valve (13) is in an excessively small amount state and sequentially carries out Step 27 (ST27) and Step 28 (ST28), if in the second determination operation at least one of the following two conditions is satisfied: Condition 1-1 that the measured value (LPT) of the low-side pressure sensor (24) is below a predetermined second low-side pressure reference value (for example, -60 kPa); and Condition 1-2 that the degree of superheat (SH) of refrigerant calculated in Step 25 (ST25) is above a predetermined first reference degree of superheat (for example, 10°C). The second low-side pressure reference value is reference pressure value. The first reference degree of superheat is dry-side reference value. On the other hand, if both Conditions 1-1 and 1-2 are not satisfied, the lower limit correction part (34) carries out Step 29 (ST29). Note that when the refrigerant flow through the expansion valve (13) is in an excessively small amount state, this means that the amount of refrigerant flow through the expansion valve (13) is small as compared with an appropriate amount of refrigerant flow. In the second determination operation, only one of Conditions 1-1 and 1-2 may be used.

In Step 27 (ST27), the lower limit correction part (34) corrects the lower limit command value (EVL) using the following Equation 3. The lower limit command value (EVL) is corrected to a larger value. Furthermore, in Step 28 (ST28), the lower limit correction part (34) corrects the correction value (EV_adj) using the following Equation 4. The corrected correction value (EV_adj') is overwritten and saved in the memory part (35).

$$\text{Equation 3: } EVL' = EVL + E2$$

$$\text{Equation 4: } EV\_adj' = EV\_adj + E2$$

In Equation 3, EVL' denotes a corrected lower limit command value, EVL denotes a lower limit command value before correction, and E2 denotes a second correction coefficient (for example, E2 = 4 pulses). In Equation 4, EV_adj' denotes a corrected correction value, and EV_adj denotes a correction value before correction stored in the memory part (35). The second correction coefficient (E2) is previously set in the lower limit correction part (34). Used as the second correction coefficient (E2) is a smaller value than the preset value ($\Delta$EV).

Upon end of Step 28 (ST28), the second correction operation terminates. After the end of the second correction operation, the valve control section (33) restarts the superheat control and outputs to the expansion valve (13) a pulse signal whose number of control pulses is the corrected lower limit command value (EVL') to adjust the opening of the expansion valve (13) to be wider. When the opening of the expansion valve (13) is adjusted, the amount of refrigerant flow through the expansion valve (13) increases. Thus, the low-side refrigerant pressure in the refrigeration cycle rises and the degree of superheat of refrigerant at the exit of the internal heat exchanger (14) decreases.

In Step 29 (ST29), the lower limit correction part (34) makes a fourth timer determination of determining whether the fourth timer started in Step 24 (ST24) still counts. Upon end of Step 29 (ST29), Step 30 (ST30) is carried out. If the fourth timer has already counted up, the lower limit correction part (34) proceeds to Step 30 (ST30). On the other hand, if the fourth timer still counts, the lower limit correction part (34) terminates the second correction operation.

In Step 30 (ST30), the lower limit correction part (34) performs a first determination operation of determining whether the refrigerant flow through the expansion valve (13) is in an excessively large amount state. If in the first determination operation Condition 2 that the degree of superheat (SH) of refrigerant calculated in Step 25 (ST25) is below a predetermined second reference degree of superheat (for example, 0°C) is satisfied, the lower limit correction part (34) determines that the refrigerant flow through the expansion valve (13) is in an excessively large amount state, and sequentially carries out Step 31 (ST31) and Step 32 (ST32). The second reference degree of superheat is wet-side reference value. On the other hand, if Condition 2 is not satisfied, the lower limit correction part (34) immediately terminates the second correction operation. Note that when the refrigerant flow through the expansion valve (13) is in an excessively large amount state, this means that the amount of refrigerant flow through the expansion valve (13) is large as compared with the appropriate amount of refrigerant flow.

In Step 31 (ST31), the lower limit correction part (34) corrects the lower limit command value (EVL) using the following Equation 5. The lower limit command value (EVL) is corrected to a smaller value. Furthermore, in Step 32 (ST32), the lower limit correction part (34) corrects the correction value (EV_adj) using the following Equation 6. The corrected correction value (EV_adj') is overwritten and saved in the memory part (35).

$$\text{Equation 5: } EVL' = EVL - E1$$

$$\text{Equation 6: } EV\_adj' = EV\_adj - E1$$

In Equation 5, EVL' denotes a corrected lower limit command value, EVL denotes a lower limit command value before correction, and E1 denotes a first correction coefficient (for example, E1 = 2 pulses). In Equation 6, EV_adj' denotes a corrected correction value, and EV_adj denotes a correction value before correction stored in the memory part (35). The first correction coefficient (E1) is previously set in the lower limit correction part (34). Used as the first correction coefficient (E1) is a smaller value than the second correction coefficient (E2).

Upon end of Step 32 (ST32), the second correction operation terminates. After the end of the second correction operation, the valve control section (33) restarts the superheat control and outputs to the expansion valve (13) a pulse signal whose number of control pulses is the corrected lower limit command value (EVL') to adjust the opening of the expansion valve (13) to be narrower. When the opening of the expansion valve (13) is adjusted, the amount of refrigerant flow through the expansion valve (13) decreases. Thus, the degree of superheat of refrigerant at the exit of the internal heat exchanger (14) increases, which avoids a wet condition in which the compressor (11) is likely to be damaged. When a predetermined period of time (for example, one minute) has passed since the end of the second correction operation, the lower limit correction part (34) starts the second correction operation again.

- EFFECTS OF EMBODIMENT -

In this embodiment, when in the lower-limit-controlled state the refrigerant flow through the expansion valve (13) is determined to be in an excessively large amount state, the lower limit command value is corrected to a smaller value and the expansion valve (13) is thereby narrowed. In this case, the expansion valve (13) is narrowed not by changing the number of control pulses (EV) itself from the normal value but by changing the lower limit command value to widen the control range.

In container refrigeration apparatuses (10) having a wide range of preset temperatures in the interior of the cold storage, generally, the amount of flow of the expansion valve (13) in fully open position is determined under a condition in which the preset temperature in the interior of the cold storage is relatively high (for example, 30°C). Thus, when the preset temperature in the interior of the cold storage is set at a low temperature (for example, -30°C), the opening of the expansion valve (13) is controlled to a value near to the lower limit of the number of control pulses (EV). For this reason, if the opening of the expansion valve (13) of a conventional refrigeration apparatus (10) is shifted, for example, to a wider position with respect to an input opening command value, the following problem may occur. When the degree of superheat of refrigerant sucked in the compressor (11) is below the desired degree of superheat, even if the expansion valve (13) is throttled to an extent that the opening command value reaches the lower limit, the actual opening of the expansion valve (13) may not reach the opening expected in control. Therefore, in the lower-limit-controlled state, the amount of refrigerant flow through the expansion valve is larger than the appropriate amount of flow. Hence, the phenomenon that the refrigerant sucked in the compressor (11) falls into a wet state may fail to be eliminated.

Unlike this, in this embodiment, even if the opening of the expansion valve (13) used in the refrigeration apparatus (10) is shifted to a wider position with respect to an input opening command value, the opening command value can be set at a smaller value than the current lower limit command value. This avoids that the amount of refrigerant flow through the expansion valve (13) exceeds the appropriate amount of flow. Therefore, even if the expansion valve (13) has any opening characteristic, it can be avoided that the refrigerant sucked in the compressor (11) falls into a wet state when the opening command value is its lower limit.

Furthermore, in this embodiment, when in the lower-limit-controlled state the refrigerant flow through the expansion valve (13) is determined to be in an excessively small amount state, the lower limit command value is corrected to a larger value and the opening of the expansion valve (23) is thereby adjusted to be wider. Here, the fact that in the lower-limit-controlled state the refrigerant flow through the expansion valve (13) is in an excessively small amount state means that the opening of the expansion valve (13) used in the refrigeration apparatus (10) is shifted to a narrower position with respect to an input opening command value. In short, this means that the lower limit command value before the correction is too small for the expansion valve (13). In view of this, in this embodiment, when in the lower-limit-controlled state the refrigerant flow through the expansion valve (13) is determined to be in an excessively small amount state, the lower limit command value is corrected to a larger value. Thus, the lower limit command value can be approached to an appropriate value.

Moreover, in this embodiment, the determination of whether the refrigerant flow is in an excessively small amount state, in which case more burden is placed on the compressor (11), is made prior to the determination of whether the refrigerant flow is in an excessively large amount state. Therefore, as compared with the case where the above determinations are made in inverse order, the duration when the refrigerant flow is in an excessively small amount state, in which case more burden is placed on the compressor (11), is shortened. This reduces the burden on the compressor (11).

Furthermore, in this embodiment, the second correction coefficient, which is used in an excessively small amount state of refrigerant flow that places more burden on the compressor (11), is set at a larger value than the first correction coefficient used in an excessively large amount state of refrigerant flow. Thus, as compared with the case of an excessively large amount state of refrigerant flow, the amount of change in the lower limit command value due to the correction is larger in an excessively small amount state of refrigerant flow that places more burden on the compressor (11). Therefore, the amount of change in the opening command value whose lower limit command value has been corrected is also larger, which changes the opening of the expansion valve (13) to a larger extent. Hence, the compressor (11) can be quickly released from the excessively small amount state of refrigerant flow that places more burden on the compressor (11), which reduces the burden on the compressor (11).

Moreover, in this embodiment, the first determination operation is performed when the duration of the lower-limit-controlled state reaches an adequate time length. Specifically, when the opening of the expansion valve (13) changes, the pressure of low-pressure refrigerant starts to change. However, it takes time to stabilize the pressure of the low-pressure refrigerant after the change of the opening of the expansion valve (13). Therefore, even if the lower-limit-controlled state starts, it takes time to stabilize the pressure of the low-pressure refrigerant. For this reason, if the first determination operation is made as soon as the start of the lower-limit-controlled state, whether the refrigerant flow through the expansion valve (13) is in an excessively large amount state may not be able to be accurately determined. To cope with this, in this embodiment, the first determination operation is performed when the duration of the lower-limit-controlled state reaches an adequate time length. Thus, the pressure of the low-pressure refrigerant has been stabilized before the first determination operation is performed. Therefore, in the first determination operation, whether the refrigerant flow through the expansion valve (13) is in an excessively large amount state can be accurately determined.

«OTHER EMBODIMENTS»

The above embodiment may have the following configurations.

In the above embodiment, upon startup of the refrigeration apparatus (10), the lower limit correction part (34) may not perform the minimum-open valve opening detection operation and the first correction operation. In this case, in the second correction operation, the lower limit correction part (34) corrects the lower limit command value (EVL) previously set in the valve control section (33).

Furthermore, in the above embodiment, the memory part (35) may be configured to store, in the second correction operation, not the correction value (EV_adj) but the corrected lower limit command value (EVL).

Moreover, in the above embodiment, the refrigeration apparatus (10) may be configured to operate in a supercritical cycle in which the high-side pressure of the refrigeration cycle is set at a higher value than the critical pressure of the refrigerant. In this case, one of the external heat exchanger (12) and the internal heat exchanger (14) acts as a gas cooler and the other acts as an evaporator.

Furthermore, in the above embodiment, the refrigeration apparatus (10) may not be a container refrigeration apparatus but may be another type of refrigeration apparatus (for example, an air conditioner).

The above embodiments are merely preferred embodiments in nature and are not intended to limit the scope, applications and use of the invention.

INDUSTRIAL APPLICABILITY

As can be seen from the above description, the present invention is useful for refrigeration apparatuses including a refrigerant circuit provided with an expansion valve variable in opening.

**Claims**

1. A refrigeration apparatus comprising:

   a refrigerant circuit (20) provided with a compressor (11) and an expansion valve (13) variable in opening, the refrigerant circuit (20) being operable in a refrigeration cycle; and
   a valve control means (33) configured to control the opening of the expansion valve (13) by outputting to the expansion valve (13) an opening command value equal to or larger than a lower limit command value, wherein the valve control means (33) is configured to perform, during operation of the refrigeration cycle and in a lower-limit-controlled state in which the opening command value is equal to the lower limit command value, a first determination operation of determining whether the refrigerant flow through the expansion valve (13) is in an excessively large amount state or not based on a condition of low-pressure refrigerant between the expansion valve (13) and the suction side of the compressor (11), and correct the lower limit command value to a smaller value if the determination result in the first determination operation is that the refrigerant flow through the expansion valve (13) is in an excessively large amount state.

2. The refrigeration apparatus of claim 1, wherein the valve control means (33) is configured to perform, during operation of the refrigeration cycle and in the lower-limit-controlled state, a second determination operation of determining whether the refrigerant flow through the expansion valve (13) is in an excessively small amount state or not based on a condition of the low-pressure refrigerant, and correct the lower limit command value to a larger value if the determination result in the second determination operation is that the refrigerant flow through the expansion valve (13) is in an excessively small amount state.

3. The refrigeration apparatus of claim 2, wherein the valve control means (33) is configured to perform the second determination operation after start of the lower-limit-controlled state and then perform the first determination operation.

4. The refrigeration apparatus of claim 2, wherein the valve control means (33) calculates a corrected lower limit command value by subtracting a predetermined first correction coefficient from the current lower limit command value if the determination result in the first determination operation is that the refrigerant flow through the expansion valve (13) is in an excessively large amount state, and the valve control means (33) calculates a corrected lower limit command value by adding a predetermined second correction coefficient larger than the first correction coefficient to the current lower limit command value if the determination result in the second determination operation is that the refrigerant flow through the expansion valve (13) is in an excessively small amount state.

5. The refrigeration apparatus of claim 2, wherein the valve control means (33) performs the first determination operation when the duration of the lower-limit-controlled state reaches a predetermined reference time value.

6. The refrigeration apparatus of claim 2, wherein the valve control means (33) performs, during operation of the refrigeration cycle, a superheat control by controlling the opening of the expansion valve (13) to bring the degree of superheat of refrigerant sucked in the compressor (11) to a predetermined desired degree of superheat, but stops the superheat control throughout the second determination operation.

7. The refrigeration apparatus of claim 1, wherein if in the first determination operation the degree of superheat of the low-pressure refrigerant is below a predetermined wet-side reference value, the valve control means (33) determines that the refrigerant flow through the expansion valve (13) is in an excessively large amount state.

8. The refrigeration apparatus of claim 2, wherein if in the second determination operation at least one of a condition in which the pressure of the low-pressure refrigerant is below a predetermined pressure reference value, and a condition in which the degree of superheat of the low-pressure refrigerant is above a predetermined dry-side reference value is satisfied, the valve control means (33) determines that the refrigerant flow through the expansion valve (13) is in an excessively small amount state.

FIG. 1

# FIG. 2

# FIG. 3

# FIG. 4

| Measured value of suction temperature sensor (RS) | RS < -20℃ | -20℃ ≦ RS < -10℃ | -10℃ ≦ RS < 5℃ | 5℃ ≦ RS < 20℃ | RS ≧ 20℃ |
|---|---|---|---|---|---|
| Lower limit command value (EVL) | 200 | 250 | 350 | 350 | 350 |

## FIG. 5

```
                    ( START )
                        │
ST1 ──      ┌───────────────────────┐
            │   Start warming-up     │
            └───────────────────────┘
                        │
ST2 ──      ╱ First timer      ╲  NO
            ╲ counted up?      ╱───┐
                   │ YES           │
ST3 ──      ┌───────────────────┐  │
            │  Start pump-down   │  │
            └───────────────────┘  │
                   │                │
ST4 ──      ╱ Second timer    ╲     │
            ╲ counted up?      ╱    │
ST6      YES│       │ NO            │
   Irregular│  ST5 ╱ LPT ≦ -55kPa? ╲ NO
   stop     │      ╲               ╱──┘
                   │ YES
ST7 ──      ┌───────────────────────┐
            │  Start minimum-open    │
            │  valve opening detection│
            └───────────────────────┘
                   │
ST8 ──      ┌──────────────────┐      ST15
            │ Start third timer │      ┌──────────────┐
            └──────────────────┘      │ EV'=EV+ΔEV   │
                   │                   └──────────────┘
ST9 ──      ╱ Third timer    ╲  YES
            ╲ counted up?     ╱──────────┐
                   │ NO                  │
ST10 ──     ┌──────────────────────┐  ST13
            │ Calculate low-side    │   ╱ EV<Hlim? ╲ YES
            │ pressure threshold(Pjdg)│  ╲          ╱
            └──────────────────────┘    │ NO
ST11 ──     ╱ LPT>Pjdg? ╲           ST14
        NO  ╲           ╱            ┌──────────────┐
                │ YES                │ EV_Llim=Hlim │
ST12 ── ┌──────────────┐            └──────────────┘
        │  EV_Llim=EV   │
        └──────────────┘
                   │
ST16 ──     ┌──────────────────────┐
            │ Calculate correction  │
            │    value (EV_adj)     │
            └──────────────────────┘
ST17 ──     ┌──────────────────────┐
            │ Correct lower limit   │
            │ command value (EVL)   │
            └──────────────────────┘
                   │
                ( END )
```

# FIG. 6

```
                          ( START )
                             │
ST21 ─┐                      ▼                    NO              ST23 ─┐
      └──────◇ EV=EVL? ◇──────────────────────────────────▶ ┌─────────────────┐
                │                                            │ Stop and reset  │
              YES                                            │ fourth timer    │
ST22 ─┐         ▼                    NO          ST24         └─────────────────┘
      └──◇ Fourth timer ◇────────────┐                              │
         ◇ already started? ◇        ▼                              │
                │              ┌──────────────────┐                 │
              YES             │ Start fourth timer │                │
                │             └──────────────────┘                 │
                ▼                     │                             │
                │◀────────────────────┘                            │
                ▼                                                   │
ST25 ─┐ ┌──────────────────────┐                                   │
      └─│ Read measured value  │                                   │
        │   Calculate SH       │                                   │
        └──────────────────────┘                                   │
                │                                                   │
                ▼                                                   │
ST26 ─┐    ⬡ or ⎛ LPT<-60kPa ⎞ ⬡ ──YES── ST27 ─┐                   │
      └──── ⬡    ⎝ SH>10℃    ⎠  ⬡             ▼                    │
                │                    ┌──────────────┐               │
               NO                    │ EVL'=EVL+4   │  ST28 ─┐      │
                │                    └──────────────┘        ▼      │
                │                           │    ┌─────────────────────┐
                │                           └────│ EVL_adj'=EVL_adj+4  │
                │                                └─────────────────────┘
                ▼                                          │
ST29 ─┐    ⬡ Fourth timer ⬡ ──NO──────────────────────────┤
      └──── ⬡ counted up?  ⬡                               │
                │                                          │
              YES                                          │
                ▼                                          │
ST30 ─┐    ◇ SH<0℃? ◇ ──YES── ST31 ─┐                      │
      └──── ◇       ◇               ▼                      │
                │           ┌──────────────┐               │
               NO           │ EVL'=EVL-2   │  ST32 ─┐      │
                │           └──────────────┘        ▼      │
                │                  │    ┌─────────────────────┐
                │                  └────│ EVL_adj'=EVL_adj-2  │
                │                       └─────────────────────┘
                │                              │              │
                ◀──────────────────────────────┴──────────────┘
                ▼
            ( END )
```

<table>
<tr><td colspan="2">**INTERNATIONAL SEARCH REPORT**</td><td>International application No.<br>PCT/JP2008/003302</td></tr>
</table>

A.  CLASSIFICATION OF SUBJECT MATTER
*F25B1/00(2006.01)i*

According to International Patent Classification (IPC) or to both national classification and IPC

B.  FIELDS SEARCHED

Minimum documentation searched (classification system followed by classification symbols)
F25B1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 5-118670 A  (Sanyo Electric Co., Ltd.),<br>14 May, 1993 (14.05.93),<br>Claim 2; Par. Nos. [0006], [0009]; Fig. 2<br>(Family: none) | 1-4,6,7<br>5,8 |
| X<br>Y | JP 2007-218532 A  (Daikin Industries, Ltd.),<br>30 August, 2007 (30.08.07),<br>Claims 1 to 2; Par. Nos. [0042] to [0043]<br>& WO 2007/094343 A1 | 1,7<br>5 |
| Y | JP 9-303886 A  (Hitachi, Ltd.),<br>28 November, 1997 (28.11.97),<br>Par. Nos. [0030] to [0034]; Fig. 4<br>(Family: none) | 5 |

[X]  Further documents are listed in the continuation of Box C.    [ ]  See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>03 December, 2008 (03.12.08) | Date of mailing of the international search report<br>16 December, 2008 (16.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/003302 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 11-37576 A  (Daikin Industries, Ltd.),<br>12 February, 1999 (12.02.99),<br>Par. Nos. [0095] to [0098]; Fig. 11<br>(Family: none) | 8 |

Form PCT/ISA/210 (continuation of second sheet) (April 2007)

**EP 2 136 159 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07225058 B